# EUROPÄISCHE PATENTSCHRIFT

(11) **EP 3 175 138 B1**
(45) Veröffentlichungstag und Bekanntmachung des Hinweises auf die Patenterteilung: **16.05.2018**
(21) Anmeldenummer: 15734106.6
(22) Anmeldetag: 29.06.2015
(51) Int. Cl.: F16F 9/46

(54) **VERSTELLBARE DÄMPFVENTILEINRICHTUNG**
ADJUSTABLE DAMPING VALVE DEVICE
DISPOSITIF DE VANNE D'AMORTISSEMENT RÉGLABLE

(30) Priorität: 01.08.2014 DE 102014215199
(43) Veröffentlichungstag der Anmeldung: 07.06.2017
(73) Patentinhaber: ZF Friedrichshafen AG, 88046 Friedrichshafen (DE)
(72) Erfinder: MANGER, Thomas, 97535 Wasserlosen (DE); SCHMITT, Stefan, 97469 Gochsheim (DE); RUHMANN, Lukas, 91350 Gremsdorf (DE)
(86) Internationale Anmeldenummer: PCT/EP2015/064628
(87) Internationale Veröffentlichungsnummer: WO 2016/015932

(56) Entgegenhaltungen:
- DE-A1- 19 624 897
- DE-B4-102010 063 386

## Beschreibung

Die Erfindung betrifft eine verstellbare Dämpfventileinrichtung gemäß dem Oberbegriff von Patentanspruch 1.

Aus der DE 10 2010 063 386 B4 ist eine verstellbare Dämpfventileinrichtung bekannt, die ein Vorstufenventil und ein Hauptstufenventil umfasst. Des Weiteren ist in Reihe zum Vorstufenventil ein Notbetriebventil geschaltet, das bei einem Ausfall der Energieversorgung für einen Aktuator der Dämpfventileinrichtung eine Notbetriebstellung einnimmt. Dem Notbetriebventil ist wiederum mindestens ein Überdruckventil parallel geschaltet, das bei einem Überdruck in einem Steuerraum der Dämpfventileinrichtung öffnet und damit eine maximale Dämpfkrafteinstellung bestimmt.

Das mindestens eine Überdruckventil ist in dem Notbetriebventil angeordnet. Man kann dafür bezogen auf den notwendigen Bauraum kleine Überdruckventile vorsehen, die man z. B. in das Überdruckventil einschraubt. Derartige Überdruckventile stehen als Baueinheit zur Verfügung und sind vergleichsweise kostengünstig. Allerdings sind sie wegen der kleinen Bauform vergleichsweise empfindlich hinsichtlich der Fertigungstoleranzen z. B. bei der Schließfeder. Dieses Problem kann man zwar mit einer verstellbaren Abstützfläche für die Schließfeder kompensieren, doch sind die realisierbaren Volumenströme durch ein einziges Überdruckventil vergleichsweise gering. Folglich sind mehrere Überdruckventile vorzusehen, wodurch der Montageaufwand wächst.

Die Aufgabe der vorliegenden Erfindung ist es, eine Dämpfventileinrichtung zu realisieren, bei der ein Überdruckventil für eine Dämpfventileinrichtung einen geringen Montageaufwand und einen vergleichsweise großen Durchtrittsquerschnitt aufweisen kann.

Erfindungsgemäß wird die Aufgabe dadurch gelöst, dass ein Ventilkörper des Überdruckventils von mindestens einer ringförmigen Ventilscheibe gebildet wird.

Der große Vorteil der Erfindung besteht darin, dass einerseits eine große druckbeaufschlagte Fläche an der Ventilscheibe zur Verfügung steht und andererseits bei einer Abhubbewegung auch ein großer Abflussquerschnitt möglich ist.

In weiterer vorteilhafter Ausgestaltung ist vorgesehen, dass das Notbetriebventil einen Führungskörper aufweist, der eine Ventilsitzfläche für die Ventilscheibe aufweist. Damit ist der Führungskörper Teil des Überdruckventils.

Grundsätzlich kann die Ventilscheibe auch von einer separaten Schließfeder vorgespannt sein. Besonders platzsparend ist jedoch eine Ausführung, bei der die Ventilscheibe elastisch ausgeführt ist und von einem Spannmittel gehalten wird.

Gemäß einem vorteilhaften Unteranspruch wird das Spannmittel von einem Notbetriebventilkörper gebildet. Durch die Zweiteilung kann die Ventilscheibe zwischen dem Spannmittel und dem Führungskörper verspannt werden und eine einfache handhabbare Baueinheit bilden.

Bevorzugt weist der Notbetriebventilkörper eine Ringgrundform auf, die mit dem Führungskörper verbunden ist. Man kann den Notbetriebventilkörper in Umfangsrichtung in beliebiger Orientierung montieren. Des Weiteren weist der Notbetriebventilkörper durch die Ringform eine vorteilhafte Größe auf, die von Montagemitteln leicht greifbar ist.

Zusätzlich weist der Notbetriebventilkörper einen Klemmbereich auf, der zusammen mit einem Aufnahmebereich des Führungskörpers einen Überdruckkanal bildet, der von der Ventilscheibe abgedeckt wird. Wegen des Klemmbereichs kann auf eine aufwändige Gewindeverbindung oder einer Verschweißung des Notbetriebventilkörpers mit dem Führungskörper verzichtet werden. Des Weiteren kann durch eine einfache Axialverschiebung des Notbetriebventilkörpers zum Führungskörper eine gezielte Einstellung der Vorspannung der Ventilscheibe erreicht werden.

Um den Herstellungsaufwand zu minimieren, weist der Notbetriebventilkörper mindestens eine axiale Aussparung auf, die den Überdruckkanal bildet. Eine axiale Aussparung lässt sich leicht herstellen.

Um eine besonders große druckbeaufschlagte Fläche an der Ventilscheibe zu erreichen, mündet der Überdruckkanal in einen Ringraum, der von der mindesten einen Ventilscheibe abgedeckt wird.

Der Ringraum wird von einem Absatz des Führungskörpers gebildet und kann deshalb auch hinterschneidungsfrei hergestellt werden.

Bei einer bevorzugten Ausführungsform weist ein Dämpfventilgehäuse einen zum Dämpfventilgehäuse separaten Gehäuseeinsatz auf, in dem der Hauptstufenventilkörper des Hauptstufenventils geführt ist, wobei der Gehäuseeinsatz topfförmig ausgeführt ist und eine Ventilsitzfläche des Notbetriebventils von dem Gehäuseeinsatz gebildet wird. Dadurch wird die Herstellung des gesamten Dämpfventilgehäuses vereinfacht.

In weiterer vorteilhafter Ausgestaltung ist die Ventilsitzfläche radial beabstandet zu einer Profilierung des Gehäuseeinsatzes ausgeführt, die einen Strömungskanal innerhalb der Dämpfventileinrichtung bildet.

Anhand der folgenden Figurenbeschreibung soll die Erfindung näher erläutert werden.

Es zeigt:
- Fig. 1: Schnitt durch eine Dämpfventileinrichtung
- Fig. 2 u. 3: Gehäuseeinsatz in zwei Ansichten.

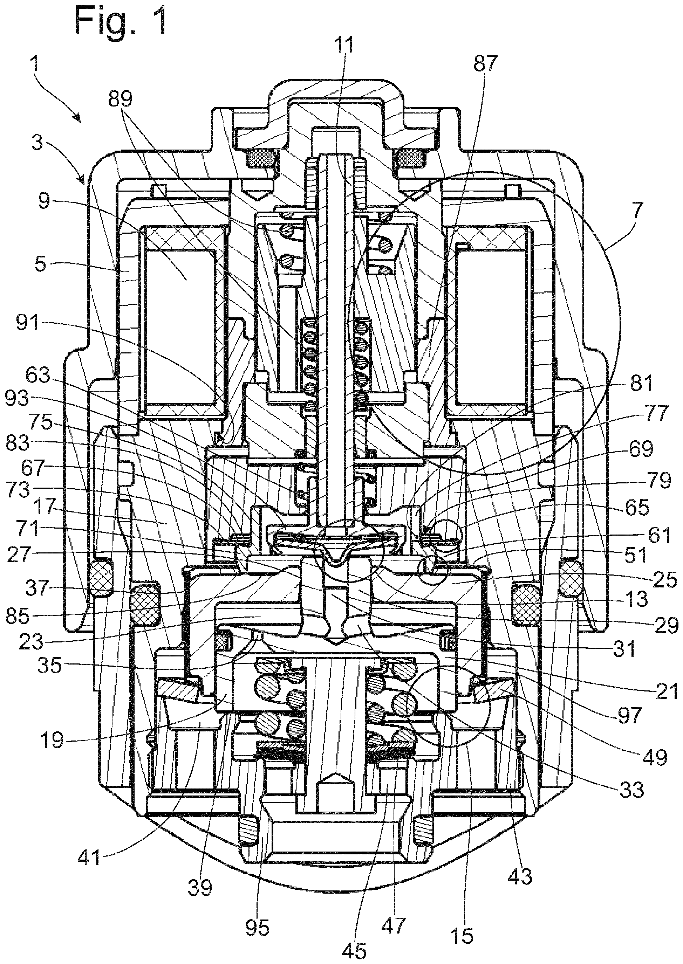

Die Figur 1 zeigt eine Dämpfventileinrichtung 1 mit einem axial zweigeteilten Dämpfventilgehäuse 3 für einen Schwingungsdämpfer beliebiger Bauform. In der vorliegende Ausgestaltung ist die Dämpfventileinrichtung 1 für eine bezogen auf einen äußeren Zylinder des Schwingungsdämpfers externe Anordnung vorgesehen, doch kann das Bauprinzip leicht auf eine Dämpfventileinrichtung z. B. an einer Kolbenstange adaptiert werden. In einem ersten Dämpfventilgehäuseabschnitt 5 ist ein an sich bekannter Aktuator 7 angeordnet, der eine Spule 9 umfasst, die über einen Anker 11 auf ein Vorstufenventil 13 einwirkt. Mit dem Vorstufenventil 13 wird ein Hauptstufenventil 15 angesteuert, das die Dämpfkraft im Schwingungsdämpfer erzeugt. Das Vorstufen- und das Hauptstufenventil 13; 15 sind im zweiten Dämpfventilgehäuseabschnitt 17 angeordnet, der eine Rohrgrundform ohne eine Zwischenwandung aufweist.

Das Hauptstufenventil 15 umfasst einen Hauptstufenventilkörper 19, der axial beweglich in einem zum Dämpfventilgehäuse 3 separaten Gehäuseeinsatz 21 geführt ist. Der Gehäuseeinsatz 21 ist topfförmig ausgeführt und bildet einen Steuerraum 23, über den das Hauptstufenventil 15 von dem Vorstufenventil 13 angesteuert wird. Ein Boden 25 des Gehäuseeinsatzes 21 verfügt über eine Öffnung 27, in der ein Führungsschaft 29 des Hauptstufenventilkörpers 19 geführt ist. In dem Führungsschaft 29 verlaufen ein Axialkanal 31 und ein Querkanal 33, die den Steuerraum 23 über einen Durchlass 35 in dem Boden 25 mit dem Vorstufenventil 13 verbinden.

Wie die Zusammenschau der Figuren 1 bis 3 verdeutlicht, weist der Gehäuseeinsatz 21 außenseitig eine Profilierung auf. Dadurch bilden einander zugewandten Flächen des Dämpfventilgehäuses 3 und des Gehäuseeinsatzes 21 mindestens einen Strömungskanal 37 für einen Dämpfmediumstrom innerhalb der Dämpfventileinrichtung 1.

Das Hauptstufenventil 15 ist als ein Sitzventil ausgeführt, so dass der Hauptstufenventilkörper 19 auf einer Hauptstufenventilsitzfläche 39 aufliegt. Radial außerhalb der Hauptstufenventilsitzfläche 39 ist mindestens ein Durchlasskanal 41 ausgeführt, der radial innerhalb des Dämpfventilgehäuses 3 angeordnet ist. Der außenseitig am Gehäuseeinsatz 21 vorliegende Strömungskanal 37 ist an den mindestens einen Durchlasskanal 41 angeschlossen.

Die Hauptstufenventilsitzfläche 39 wird wiederum von einem Ventileinsatz 43 gebildet, über den der Gehäuseeinsatz 21 im Dämpfventilgehäuse 3 axial positioniert wird. In der vorliegenden Ausführungsform verfügt der Ventileinsatz 43 über Dämpfkanäle 45, die mit mindestens einer Ventilscheibe 47 zusammenwirken. Es handelt sich dabei aber um eine Option.

Der Gehäuseeinsatz 21 wird von einem Federelement 49 in der Bauform einer Scheibenfeder axial gegen eine Stützfläche 51 des Dämpfventilgehäuses 3 vorgespannt. Das Federelement 49 stützt sich wiederum an dem Ventileinsatz 43 ab.

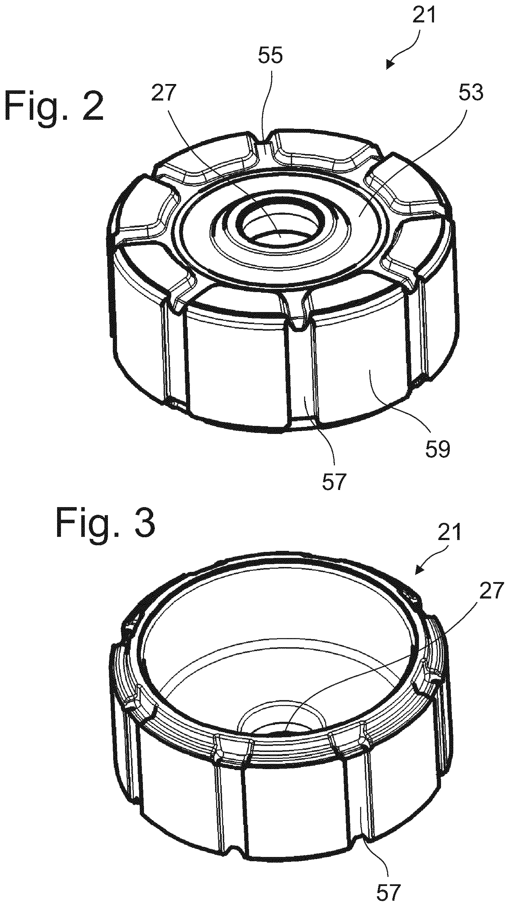

Die Figuren 2 und 3 zeigen den Gehäuseeinsatz 21 als Einzelteil in verschiedenen Außenansichten. In der Draufsicht ist ein zentraler Ringkanal 53 erkennbar, dem sich mehrere Radialkanäle 55 anschließen. Diese Radialkanäle 55 gehen in Axialnuten 57 in einer äußeren Mantelfläche 59 des Gehäuseeinsatzes über. Wenn die Radialkanäle 55 und Axialnuten 57 z. B. spanlos in einem Pressverfahren hergestellt werden, dann ist es sinnvoll, möglichst viele und möglichst flache Kanäle 55 und Nuten 57 vorzusehen, um die Formabweichungen am Gehäuseeinsatz 21 bedingt durch das Herstellungsverfahren zu minimieren.

Grundsätzlich wäre eine Dämpfventileinrichtung 1 mit einem Hauptstufenventil 15 und einem Vorstufenventil 13 funktionsfähig. Insbesondere für den Fall, dass der Aktuator 7 nicht mehr mit Energie versorgt werden kann, besteht die Option, dass ein Notbetriebventil 61 verwendet wird, das funktional in Reihe zum Vorstufenventil 13 geschaltet ist. Das Notbetriebventil 61 nimmt bei Energieausfall bedingt durch eine Schließfeder 63 eine Schließstellung ein. Ein Restquerschnitt bestimmt dann den Druck im Steuerraum 23, der wiederum die Schließkraft auf den Hauptstufenventilkörper 19 beeinflusst. Der besagte Restquerschnitt kann Null sein oder eine definierte Größe aufweisen.

Dem Notbetriebventil 61 ist ein Überdruckventil 65 in der Bauform eines Sitzventils funktional parallel geschaltet und innerhalb des Notbetriebventils 61 angeordnet. Das Überdruckventil weist einen Ventilkörper 67 auf, der von mindestens einer ringförmigen Ventilscheibe gebildet wird. Konstruktiv umfasst das Notbetriebventil 61 einen Führungskörper 69 und einen Notbetriebventilkörper 71. An dem Führungskörper 69 ist eine Ventilsitzfläche 73 für die mindestens eine Ventilscheibe 67 ausgeführt. Die Ventilscheibe 67 ist in diesem Ausführungsbeispiel elastisch und wird von einem Spannmittel gehalten. Als Spannmittel fungiert der Notbetriebventilkörper 71 mit seiner Ringgrundform, über die er mit dem Führungskörper 69 verbunden ist. Dazu verfügt der Notbetriebventilkörper 71 über einen Klemmbereich 75 mit mindestens einer axialen Aussparung 77, die zusammen mit einem Aufnahmebereich 75 des Führungskörpers 69 einen Überdruckkanal 81 bildet, der von der Ventilscheibe 67 abgedeckt wird. In dieser Ausführungsvariante mündet der Überdruckkanal in einem Ringraum 83, der von der mindestens einen Ventilscheibe 67 abgedeckt wird. Der Ringraum 83 selbst wird von einem Absatz des Führungskörpers 69 gebildet.

Eine Ventilsitzfläche 85 des Notbetriebventils 61 wird von dem Gehäuseeinsatz 21 bzw. der Ringnut 53 gebildet, so dass die Ventilsitzfläche 85 radial beabstandet zu der Profilierung 55 des Gehäuseeinsatzes 21 ausgeführt ist.

Wie aus der Fig. 1 ersichtlich ist, ist der zweite Dämpfventilgehäuseabschnitt 17 nicht nur rohrförmig, sondern auch mit einer gestuften Innenkontur ausgeführt, die sich ohne Rücksprünge ausgehend von einem ersten Ende am Aktuators 7 in Richtung eines zweiten Endes im Bereich des Ventileinsatzes 43 vergrößert. Dadurch besteht die Möglichkeit, dass die Montage in einer Montagerichtung über die große Öffnung am zweiten Ende erfolgen kann.

Bei der Montage wird über das zweite Ende zuerst ein Rückschlusskörper 87 mit Anker 11 und inkl. einer Federanordnung 89 des Aktuators 7 in den zweiten Dämpfventilgehäuseabschnitt 17 eingelegt. Der Rückschlusskörper 87 stützt sich an einem umlaufenden Vorsprung 91 ab, der den kleinsten Innendurchmesser des Rohrkörpers 17 darstellt. Danach wird ein Vorstufenventilkörper 93 auf den Anker 11 aufgelegt.

Danach wird das Notbetriebventil 61, d. h. die Baueinheit aus Führungskörper 69, mindestens einer Ventilscheibe 67 und dem Notbetriebventilkörper 71, zusammen mit der Schließfeder 63 für das Notbetriebventil montiert.

In einem weiteren Montageschritt wird der Gehäuseeinsatz 21 eingeführt, der in seiner Endposition an der Stützfläche 51 des zweiten Dämpfventilgehäuseabschnitts 17 anliegt. Im nächsten Montageschritt wird der Hauptstufenventilkörper 19 ggf. in den Gehäuseeinsatz 21 eingesetzt. Es folgt das Federelement 49. Abgeschlossen wird das Dämpfventilgehäuse 3 von dem Ventileinsatz 43, der z. B. mittels einer Gewindeverbindung an dem zweiten Dämpfventilgehäuseabschnitt 17 befestigt ist.

Bei einer Arbeitsbewegung des Schwingungsdämpfers wird Dämpfmedium über einen Rohranschluss 95 des Ventileinsatzes 43 in die Dämpfventileinrichtung 1 verdrängt. Das Dämpfmedium passiert dabei den mindestens einen Dämpfkanal 45 und die mindestens eine Ventilscheibe 47. Dadurch wirkt eine Abhubkraft auf den Hauptstufenventilkörper 19. Das Dämpfmedium gelangt über den Durchlass 35 in den Steuerraum 23 und übt damit auf den Hauptstufenventilkörper 19 eine Schließkraft aus. Das Vorstufenventil 13 steuert einen Abflussquerschnitt aus dem Steuerraum 23 in den Strömungskanal 37 zwischen dem Gehäuseeinsatz 21 und dem zweiten Dämpfventilgehäuseabschnitt 17. Bei intakter Energieversorgung nimmt das Notbetriebventil 61 eine Durchlassposition ein, bei der der Notbetriebventilkörper 71 von der Ventilsitzfläche 85 abgehoben ist. Das abfließende Dämpfmedium erreicht über den Strömungskanal 37 einen Ringraum 97 zwischen dem zweiten Dämpfventilgehäuseabschnitt 17 und dem Ventileinsatz 43, über dessen mindestens einen Durchlasskanal 41 das Dämpfmedium des Vorstufenventils 13 abfließt.

Sofern die Energieversorgung für den Aktuator 7 gestört ist, nimmt das Notbetriebventil 61 eine Schließposition bei, bei der der Notbetriebventilkörper 71 auf der Ventilsitzfläche 85 aufliegt, wie in der Fig. 1 dargestellt ist. Dann wirkt auf das Vorstufenventil 13 nur eine kleine Schließkraft der Federanordnung 89, so dass ein geringer Steuerdruck im Steuerraum 23 genügt, um das Vorstufenventil 13 zu öffnen. Eine maximal weiche Dämpfkrafteinstellung wird durch das geschlossene Notbetriebventil 61 verhindert. Andererseits verhindert das dem Notbetriebventil 61 parallel geschaltete Überdruckventil 65 einen überhöhten Steuerdruck. Das Dämpfmedium gelangt von dem Vorstufenventil 13 durch den Überdruckkanal 81 zum Ringraum 83 vor dem Überdruckventil 65, das öffnet, indem die elastische Ventilscheibe 67 von der Ventilsitzfläche 13 am Führungskörper 69 abhebt. Der weitere Strömungsweg ist dann identisch mit dem Strömungsweg bei intaktem Aktuator.

Bei einer Abhubbewegung des Hauptstufenventilkörpers 19 von seiner Hauptstufenventilsitzfläche 39 strömt Dämpfmedium nach radial außen und fließt ebenfalls über den mindestens einen Durchlasskanal 41 aus dem Dämpfventilgehäuse 3 ab.

Das Dämpfmedium fließt dann in einen nicht dargestellten Ausgleichs- oder Arbeitsraum.

**Bezugszeichen**

| | | | |
|---|---|---|---|
| 1 | Dämpfventileinrichtung | 61 | Notbetriebventil |
| 3 | Dämpfventilgehäuse | 63 | Schließfeder |
| 5 | erster Dämpfventilgehäuseabschnitt | 65 | Überdruckventil |
| 7 | Aktuator | 67 | Ventilkörper |
| 9 | Spule | 69 | Führungskörper |
| 11 | Anker | 71 | Notbetriebventilkörper |
| 13 | Vorstufenventil | 73 | Ventilsitzfläche |
| 15 | Hauptstufenventil | 75 | Klemmbereich |
| 17 | zweiter Dämpfventilgehäuseabschnitt | 77 | axiale Aussparung |
| 19 | Hauptstufenventilkörper | 79 | Aufnahmebereich |
| 21 | Gehäuseeinsatz | 81 | Überdruckkanal |
| 23 | Steuerraum | 83 | Ringraum |
| 25 | Boden | 85 | Ventilsitzfläche |
| 27 | Öffnung | 87 | Rückschlusskörper |
| 29 | Führungsschaft | 89 | Federanordnung |
| 31 | Axialkanal | 91 | Vorsprung |
| 33 | Querkanal | 93 | Vorstufenventilkörper |
| 35 | Durchlass | 95 | Rohranschluss |
| 37 | Strömungskanal | 97 | Ringraum |
| 39 | Hauptstufenventilsitzfläche | | |
| 41 | Durchlasskanal | | |
| 43 | Ventileinsatz | | |
| 45 | Dämpfkanäle | | |
| 47 | Ventilscheibe | | |
| 49 | Federelement | | |
| 51 | Stützfläche | | |
| 53 | Ringkanal | | |
| 55 | Radialkanäle | | |
| 57 | Axialnuten | | |
| 59 | äußere Mantelfläche | | |

## Patentansprüche

1. Verstellbare Dämpfventileinrichtung (1) für einen Schwingungsdämpfer, umfassend ein Hauptstufenventil (15), das von einem Vorstufenventil (13) angesteuert wird, dem funktional in Reihe ein Notbetriebventil (61) geschaltet ist, wobei innerhalb des Notbetriebventils (61) ein Überdruckventil (65) in der Bauform eines Sitzventils angeordnet ist, das dem Notbetriebventil (61) funktional parallel geschaltet ist, **dadurch gekennzeichnet, dass** ein Ventilkörper (67) des Überdruckventils (65) von mindestens einer ringförmigen Ventilscheibe gebildet wird.

2. Verstellbare Dämpfventileinrichtung nach Anspruch 1, **dadurch gekennzeichnet, dass** das Notbetriebventil (61) einen Führungskörper (69) aufweist, der eine Ventilsitzfläche (73) für die Ventilscheibe (67) aufweist.

3. Verstellbare Dämpfventileinrichtung nach den Ansprüchen 1 oder 2, **dadurch gekennzeichnet, dass** die Ventilscheibe (67) elastisch ausgeführt ist und von einem Spannmittel gehalten wird.

4. Verstellbare Dämpfventileinrichtung nach Anspruch 3, **dadurch gekennzeichnet, dass** das Spannmittel von einem Notbetriebventilkörper (71) gebildet wird.

5. Verstellbare Dämpfventileinrichtung nach den Ansprüchen 1 oder 4, **dadurch gekennzeichnet, dass** ein Notbetriebventilkörper (71) eine Ringgrundform aufweist, die mit dem Führungskörper (69) verbunden ist.

6. Verstellbare Dämpfventileinrichtung nach Anspruch 5, **dadurch gekennzeichnet, dass** der Notbetriebventilkörper (71) einen Klemmbereich (75) aufweist, der zusammen mit einem Aufnahmebereich (79) des Führungskörpers (69) einen Überdruckkanal (81) bildet, der von der Ventilscheibe (67) abgedeckt wird.

7. Verstellbare Dämpfventileinrichtung nach mindestens einem der Ansprüche 1 bis 6, **dadurch gekennzeichnet, dass** der Notbetriebventilkörper (71) mindestens eine axiale Aussparungen (77) aufweist, die den Überdruckkanal (81) bildet.

8. Verstellbare Dämpfventileinrichtung nach Anspruch 6, **dadurch gekennzeichnet, dass** der Überdruckkanal (81) in einen Ringraum (83) mündet, der von der mindesten einen Ventilscheibe (67) abgedeckt wird.

9. Verstellbare Dämpfventileinrichtung nach Anspruch 8, **dadurch gekennzeichnet, dass** der Ringraum (83) von einem Absatz des Führungskörpers (69) gebildet wird.

10. Verstellbare Dämpfventileinrichtung nach mindestens einem der Ansprüche 1-9, **dadurch gekennzeichnet, dass** ein Dämpfventilgehäuse (3) einen zum Dämpfventilgehäuse (3) separaten Gehäuseeinsatz (21) aufweist, in dem der Hauptstufenventilkörper (19) des Hauptstufenventils geführt ist, wobei der Gehäuseeinsatz (21) topfförmig ausgeführt ist und eine Ventilsitzfläche (85) des Notbetriebventils (61) von dem Gehäuseeinsatz (21) gebildet wird.

11. Verstellbare Dämpfventileinrichtung nach Anspruch 10, **dadurch gekennzeichnet, dass** die Ventilsitzfläche (85) radial beabstandet zu einer Profilierung (55) des Gehäuseeinsatz (21) ausgeführt ist, die einen Strömungskanal (37) innerhalb der Dämpfventileinrichtung (1) bildet.

## Claims

1. Adjustable damping valve device (1) for a vibration damper, comprising a main stage valve (15) actuated by a pilot stage valve (13), functionally in series with which there is connected an emergency operation valve (61), wherein, within the emergency operation valve (61), there is arranged an overpressure valve (65) which is in the structural form of a seat valve and which is connected functionally in parallel with the emergency operation valve (61), **characterized in that** a valve body (67) of the overpressure valve (65) is formed by at least one ring-shaped valve disc.

2. Adjustable damping valve device according to Claim 1, **characterized in that** the emergency operation valve (61) has a guide body (69) which has a valve seat surface (73) for the valve disc (67).

3. Adjustable damping valve device according to Claims 1 or 2, **characterized in that** the valve disc (67) is of elastic design and is held by a clamping means.

4. Adjustable damping valve device according to Claim 3, **characterized in that** the clamping means is formed by an emergency operation valve body (71).

5. Adjustable damping valve device according to Claims 1 or 4, **characterized in that** an emergency operation valve body (71) has a ring-shaped basic shape, which is connected to the guide body (69).

6. Adjustable damping valve device according to Claim 5, **characterized in that** the emergency operation valve body (71) has a clamping region (75) which, together with a receiving region (79) of the guide body (69), forms an overpressure channel (81) which is covered by the valve disc (67).

7. Adjustable damping valve device according to at least one of Claims 1 to 6, **characterized in that** the emergency operation valve body (71) has at least one axial recesses (77) which forms the overpressure channel (81).

8. Adjustable damping valve device according to Claim 6, **characterized in that** the overpressure channel (81) opens into a ring-shaped chamber (83) which is covered by the at least one valve disc (67).

9. Adjustable damping valve device according to Claim 8, **characterized in that** the ring-shaped chamber (83) is formed by a shoulder of the guide body (69).

10. Adjustable damping valve device according to at least one of Claims 1-9, **characterized in that** a damping valve housing (3) has a housing insert (21) which is separate from the damping valve housing (3) and in which the main stage valve body (19) of the main stage valve is guided, wherein the housing insert (21) is of pot-shaped design, and a valve seat surface (85) of the emergency operation valve (61) is formed by the housing insert (21).

11. Adjustable damping valve device according to Claim 10, **characterized in that** the valve seat surface (85) is formed so as to be radially spaced apart from a profiling (55), which forms a flow channel (37) within the damping valve device (1), of the housing insert (21).

## Revendications

1. Dispositif de soupape d'amortissement réglable (1) pour un amortisseur de vibrations, comprenant une soupape à étage principal (15), qui est commandée par une soupape à étage préliminaire (13) à laquelle est reliée fonctionnellement en série une soupape de fonctionnement d'urgence (61), une soupape de surpression (65) sous la forme d'une soupape à siège étant disposée à l'intérieur de la soupape de fonctionnement d'urgence (61), laquelle est réliée fonctionnellement en parallèle à la soupape de fonctionnement d'urgence (61), **caractérisé en ce qu'**un corps de soupape (67) de la soupape de surpression (65) est formé par au moins un disque de soupape annulaire.

2. Dispositif de soupape d'amortissement réglable selon la revendication 1, **caractérisé en ce que** la soupape de fonctionnement d'urgence (61) présente un corps de guidage (69) qui présente une surface de siège de soupape (73) pour le disque de soupape (67).

3. Dispositif de soupape d'amortissement réglable selon les revendications 1 ou 2, **caractérisé en ce que** le disque de soupape (67) est réalisé sous forme élastique et est retenu par un moyen de serrage.

4. Dispositif de soupape d'amortissement réglable selon la revendication 3, **caractérisé en ce que** le moyen de serrage est formé par un corps de soupape de fonctionnement d'urgence (71).

5. Dispositif de soupape d'amortissement réglable selon les revendications 1 ou 4, **caractérisé en ce qu'**un corps de soupape de fonctionnement d'urgence (71) présente une forme de base annulaire qui est connectée au corps de guidage (69).

6. Dispositif de soupape d'amortissement réglable selon la revendication 5, **caractérisé en ce que** le corps de soupape de fonctionnement d'urgence (71) présente une région de serrage (75) qui forme, conjointement avec une région de réception (79) du corps de guidage (69), un canal de surpression (81) qui est recouvert par le disque de soupape (67).

7. Dispositif de soupape d'amortissement réglable selon au moins l'une quelconque des revendications 1 à 6, **caractérisé en ce que** le corps de soupape de fonctionnement d'urgence (71) présente au moins un évidements axial (77) qui forme le canal de surpression (81).

8. Dispositif de soupape d'amortissement réglable selon la revendication 6, **caractérisé en ce que** le canal de surpression (81) débouche dans un espace annulaire (83) qui est recouvert par au moins un disque de soupape (67).

9. Dispositif de soupape d'amortissement réglable selon la revendication 8, **caractérisé en ce que** l'espace annulaire (83) est formé par un épaulement du corps de guidage (69).

10. Dispositif de soupape d'amortissement réglable selon au moins l'une quelconque des revendications 1 à 9, **caractérisé en ce qu'**un boîtier de soupape d'amortissement (3) présente un insert de boîtier (21) séparé du boîtier de soupape d'amortissement (3), dans lequel est guidé le corps de soupape à étage principal (19) de la soupape à étage principal, l'insert de boîtier (21) étant réalisé en forme de pot et une surface de siège de soupape (85) de la soupape de fonctionnement d'urgence (61) étant formée par l'insert de boîtier (21).

11. Dispositif de soupape d'amortissement réglable selon la revendication 10, **caractérisé en ce que** la surface de siège de soupape (85) est réalisée à distance radiale d'un profilage (55) de l'insert de boîtier (21) qui forme un canal d'écoulement (37) à l'intérieur du dispositif de soupape d'amortissement (1).
